# EUROPEAN PATENT SPECIFICATION

(11) **EP 2 794 988 B1**
(45) Date of publication and mention of the grant of the patent: **13.04.2016**
(21) Application number: 12809983.5
(22) Date of filing: 18.12.2012
(51) Int. Cl.: D21H 13/26, B32B 5/00, D06M 11/00, D21H 13/50, D21H 17/67, D21H 19/16, D21H 19/20, D21H 19/24, D21H 27/30

(54) **STRUCTURAL CORE**
STRUKTURIERTER KERN
NOYAU STRUCTUREL

(30) Priority: 19.12.2011 US 201161577144 P
(43) Date of publication of application: 29.10.2014
(73) Proprietor: E. I. du Pont de Nemours and Company, Wilmington, DE 19898 (US)
(72) Inventor: KNOFF, Warren Francis, Richmond, Virginia 23220 (US); LEVIT, Mikhail R., Glen Allen, Virginia 23059 (US); RICHARDSON III, Llewellyn Bentley, Chesterfield, Virginia 23832 (US)
(74) Representative: Gritschneder, Sebastian
(86) International application number: PCT/US2012/070418
(87) International publication number: WO 2013/096342

(56) References cited:
- WO-A2-2011/054008
- WO-A2-2011/062980
- JP-A- 2010 037 660
- US-A- 5 137 768

## Description

### BACKGROUND

### 1. Field of the Invention

This invention relates to a high strength core structure made from a fibrous web comprising carbon nanotubes. The core structure may be in the form of a honeycomb or a folded core.

### 2. Description of Related Art

Japanese patent application number JP 2010037660A to Furuzuki discloses that a carbon nanotube (CNT) containing paper can be produced by adding carbon nanotubes in a mono-dispersed state in an amount of 1 to 50 wt.% relative to the total amount of solid materials during a papermaking process. The constituent fiber component of the CNT-containing paper is a natural fiber, a synthetic fiber, an inorganic fiber, a metallic fiber or the like.

Chinese patent application number CN 101284661A to Wang teaches the preparation of carbon nanotube sheets by adding carbon nanotube material to a solution comprising metallic particles, performing flocculation treatment, adding a reducing agent and separating a nanotube flocculent structure from the solution.

PCT publication WO 2011054008A to Shah describes a composition including a carbon nanotube (CNT) infused aramid fiber material that includes an aramid fiber material of spoolable dimensions, a barrier coating conformally disposed about the aramid fiber material, and carbon nanotubes (CNT's) infused to the aramid fiber material. The infused CNTs are uniform in length and uniform in density.

Core structures for composite sandwich panels from high modulus high strength fiber nonwoven sheets, mostly in the form of honeycomb, are used in different applications but primarily in the aerospace industry where strength to weight or stiffness to weight ratios have very high values. For example, US Patent 5,137,768 to Lin describes a honeycomb core made from a high-density wet-laid nonwoven comprising 50 wt.% or more of p-aramid fiber with the rest of the composition being a binder and other additives.

Publication WO2011/062980 describes a honeycomb core made from paper comprising 20-85 weight percent of carbon fiber floc. The carbon fibers have a non-round cross sectional aspect ratio of at least 1.5:1. The paper has a fiber volume fraction of at least 35%. The arithmetic mean length of the carbon fibers is at least 0.5 mm. and a length weighted mean length of at least 0.9 mm. Publication WO2011/062980 describes a folded core made from the same paper.

There is an ongoing need to provide core structures and composite panels comprising a core having improved mechanical properties such as stiffness, strength and toughness. This is particularly true for structures used in aircraft, trains, and boats.

### SUMMARY OF THE INVENTION

This invention pertains to a structural core comprising a nonwoven fibrous reinforcement web of carbon nanotubes, the web being coated with a thermoset or thermoplastic resin wherein:
(i) the carbon nanotubes are oriented within the reinforcement web such that, after resin coating, the ratio of modulus in the plane of the web in a first direction to the modulus in a second direction orthogonal to the first direction is no greater than 2.0,
(ii) the in-plane Young's modulus of the resin coated web is at least 14 GPa, and
(iii) the coating resin comprises from 15 to 75 weight percent of the weight of web plus resin.

The invention is further directed to a composite panel containing a core structure.

### BRIEF DESCRIPTION OF THE DRAWINGS

FIGS 1A and 1B are respectively plan and end views of a hexagonal shaped honeycomb.
FIG 2 is a perspective view of a hexagonal cellular honeycomb.
FIG 3 is a perspective view of honeycomb provided with facesheets.
FIG 4 is a perspective view of a folded core structure.
FIGS 5A to 5D show end views of embodiments of multi layer reinforcement webs.

### DETAILED DESCRIPTION OF THE INVENTION

### Core Structure

This invention is directed to a core structure of high strength made from a fibrous reinforcement web and a matrix resin. The core structure may be in the form of a honeycomb or a folded core.

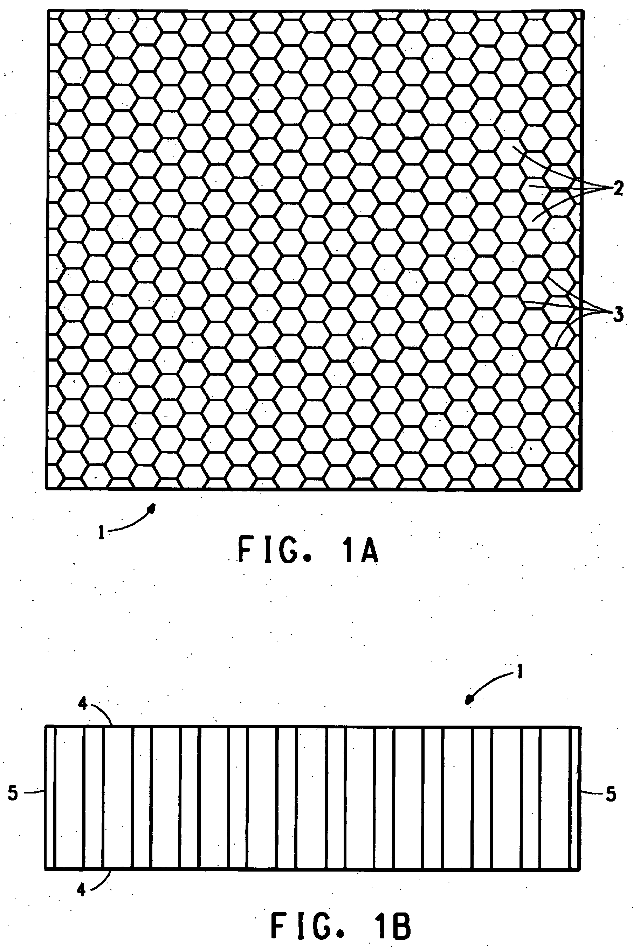

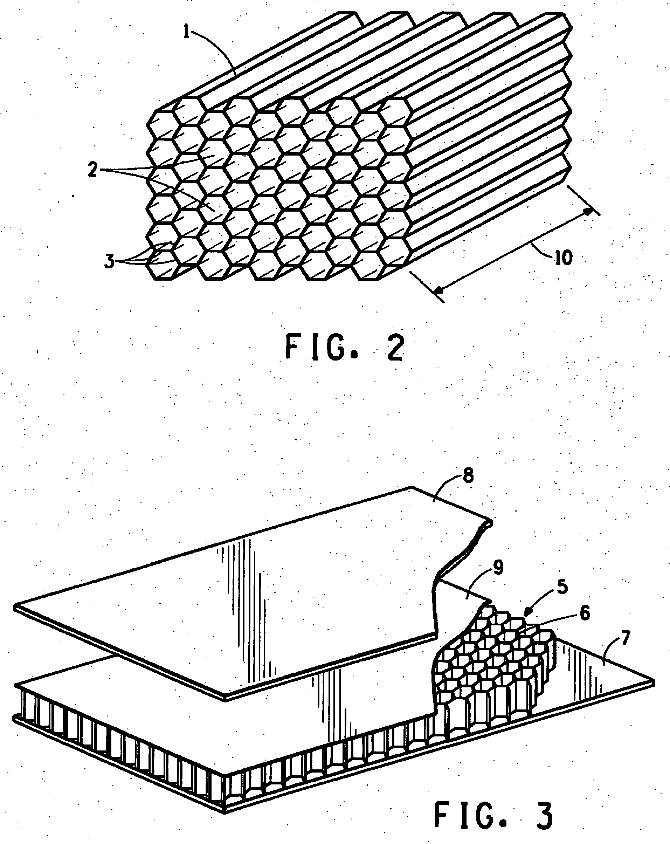

FIG 1A is a plan view illustration of one honeycomb 1 of this invention and shows cells 2 formed by cell walls 3. FIG 1B is an end view of the honeycomb shown in FIG 1A and shows the two exterior surfaces, or faces 4 formed at both ends of the cell walls. The core also has edges 5. FIG 2 is a perspective view of the honeycomb. Shown is honeycomb 1 having hexagonal cells 2 and cell walls 3. The "T" dimension or the thickness of the honeycomb is shown at 10 in FIG 2. Hexagonal cells are shown, however other geometric arrangements are possible with square, over-expanded and flex-core cells being among the most common possible arrangements. Such cell types are well known in the art and reference can be made to Honeycomb Technology pages 14 to 20 by T. Bitzer (Chapman & Hall, publishers, 1997) for additional information on possible geometric cell types.

FIG 3 shows a structural composite sandwich panel 5 assembled from a honeycomb core 6 with facesheets 7 and 8, attached to the two exterior surfaces of the core. The preferred facesheet material is a prepreg, a fibrous sheet impregnated with thermoset or thermoplastic resin although other plastic or metallic facesheets may be utilized. With metallic facesheets, and in some circumstances with plastic or prepreg facesheets, an adhesive film 9 is also used. Normally there are at least two prepreg facesheets on either side of the core.

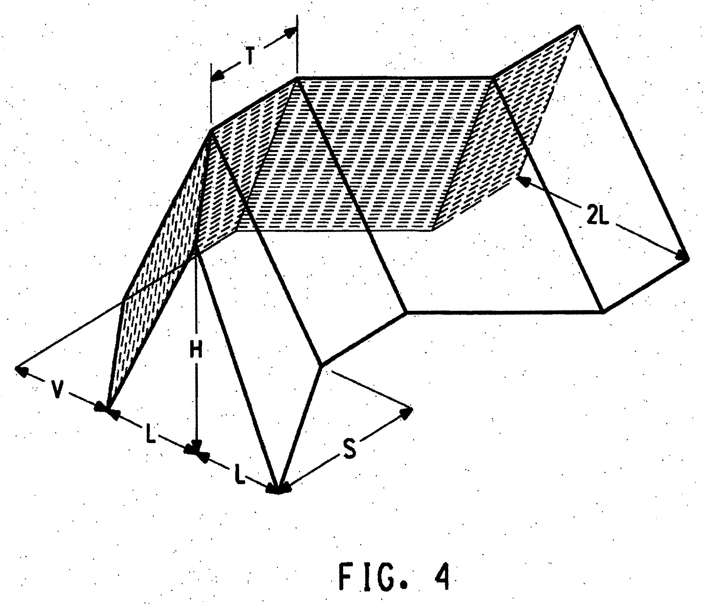

FIG 4 shows a folded core structure which is a 3-dimensional structure of folded geometric patterns folded from a relatively thin planar sheet material. Such folded or tessellated sheet structures are discussed in US patents 6,935,997 B2 and 6,800,351 B1. A chevron is a common pattern for three dimensional folded tessellated core structures. Such structures are different from honeycomb structures. A preferred tessellated folded structure is of the type described in United States patent number 6,913,570 B2 and United States patent publication number 2010/0048078.

### Reinforcement Web

The core structure comprises a fibrous reinforcement web from carbon nanotubes. In some embodiments, this fibrous reinforcement web is a nonwoven sheet that may be in the form of a paper or a randomly oriented discontinuous fiber mat.

A sheet structure suitable as a web of carbon nanotubes to make high strength core is avaiable from Nanocomp Technologies, Inc. , Concord, NH and is described in United States patent application publication 2009/0215344. Preferably the CNT's have an aspect ratio of at least 100 in order to provide a strong enough nonwoven structure capable of withstanding further continuous processing.

In some embodiments, the web thickness is from 12 to 100 micrometers (0.5 to 4 mils) and the basis weight is from 10 to 50 grams per square meter (0.3 to 1.5 ounces per square yard).

The CNT's are oriented within the web such that, after resin coating, the ratio of modulus of the web in a first direction to the modulus in a second direction orthogonal to the first direction is no greater than 2.0. In some embodiments, the ratio of modulus of the web in the first direction to the modulus in the second direction orthogonal to the first direction is no greater than 1.5. A web in which the CNT's are randomly distributed throughout the web would have a modulus ratio of about 1. A web having a significant degree of fiber orientation would have a modulus ratio greater than 2. In some embodiments, the first direction is an axial direction. The axial direction is the long direction within the plane of the web, that is to say, the direction in which the web is being produced by a machine. This is also known as the machine direction. In some embodiments, the second direction is the cross direction. The cross direction is across the web in a direction orthogonal to the axial direction.

The formed nonwoven sheet of CNT's can be optionally calendered to increase its density. In some embodimernts of this invention, calendering is such that the density of the reinforcement web before coating with resin is at least 0.7 g/cm³. During the calendering process the web is compressed but not stretched thus minimizing the degree of orientation of the CNT's.

Nonwoven and woven sheets made from carbon fibers normally cannot withstand calendering processes as the very high pressure together with shear forces crushes the sheet, especially where the fibers cross over each other. Suprisngly, it has been found that a nonwoven sheet from carbon nanotubes as described above can be calendered and densified between metal - metal nip rolls at very high linear pressure (e.g. at several thousand N/cm). No loss in tensile strength was observed and only a slight drop in elongation at break was noted. The lower elongation value was still adequate for further processing of the sheet structure. Detailed data of this surprising finding is shown below in the examples.

In some embodiments, the fibrous reinforcement web comprises at least two layers, wherein a first layer is formed from a nonwoven sheet of carbon nanotubes. The second layer may be another layer formed from a nonwoven sheet of carbon nanotubes, a nonwoven sheet comprising high modulus high strength fibers of a type other than carbon nanotubes, or from a nonwoven sheet comprising a combination of carbon nanotubes and high modulus high strength fibers of another type. The web may comprise a plurality of first layers, second layers or both.

When the fibrous reinforcing web comprises several layers of nonwoven sheet of carbon nanotubes, each layer can comprise randomly oriented carbon nanotubes or each layer can comprise fibers that are significantly oriented in one particular direction. Such orientation can be useful to increase the modulus and strength of a resin impregnated web. However, the ratio of the modulus of the resin impregnated web in the first direction to the modulus of the web in the second direction should not exceed 2. By significantly orientedis meant that there are more fibers oriented in one particular direction than in another, that is to say, the fiber orientation is not random. In some embodiments, layers comprising orientated fibers can be arranged such that the orientation of fibers in one layer is orthogonal to the orientation of fibers in another layer. In some instances, layers of oriented fibers may be adjacent to each other. The fiber orientation in one layer may be other than orthogonal to the fiber orietation in another layer, for example, the fibers in one layer may be oriented in a zero degree direction and fibers in another layer oriented at an angle of 45 degrees to the zero direction. A web may also comprise a blend of layers having random and non-random fiber orientation.

### Coating Resin

The surface of the reinforcing web is coated with a matrix resin. In some embodiments, the resin either fully or partially impregnates the web. The coating resin comprises from 15 to 75 weight percent of the weight of web plus resin. The matrix resin may be a thermoset or thermoplastic resin. Suitable resins include phenolic, epoxy, flame retarded epoxy, polyester, polyamide, polyimide, polyphenylenesulfide (PPS), Polyetheretherketone (PEEK), polyertherketoneketone (PEKK), polyether sulfone (PES) and blends thereof. The matrix resin may contain additional performance enhancing or modifying ingredients to improve properties of the structural core.of this invention. Such ingredients include clay nanoparticles, carbon nanotubes, mica powder and the like.

Suitable phenolic resins normally comply with United States Military Specification MIL-R-9299C. Preferably, the resin is a phenol formaldehyde resin and may be a resole or a novolac resin. Other aldehydes, for example furfuraldehyde, may be used, and other phenols for example hydroquinone and p-cresol may also be used. The preparation of p-cresol and properties of such resins are described in "Phenolic Resins," authors A. Knop and L. A. Pilato, Springer-Verlag, Berlin, 1985. A resole resin is cured simply by the application of heat whereas a novolak resin requires for its cure the additional presence of a formaldehyde generating substance, for example hexamethylenetetramine, also known as hexamine. Resole type resins are preferred. Suitable phenolic resins are available from companies such Hexion Specialty Chemicals, Columbus, OH, Georgia Pacific Resins Inc., Atlanta, AL or Durez Corporation, Detroit, MI.

When either full or partial resin impregnation of the web is conducted prior to core forming it is preferred that the resin is partially cured. Such a partial curing process, known as B-staging, is well known in the composite materials industry. By B-stage we mean an intermediate stage in the polymerization reaction in which the resin softens with heat and is plastic and fusible but does not entirely dissolve or fuse. The B-staged reinforcing web is still capable of further processing into the desired core shape. In embodiments where the resin content in the first-coating step is low, for example from 5 to 15 weight percent, or the web is very thin, for example from 0.5 to 0.7 mil thick, then the resin can be fully cured prior to forming the core.

When the resin impregnation is conducted after the core has been formed, it is normally done in a sequence of repeating steps of dipping followed by solvent removal and curing of the resin. The preferred final core densities (nonwoven sheet plus resin) are in the range of 20 to 150 kg/m³. During the resin impregnation process, resin is coated onto and absorbed into and the reinforcing web.

The resins may be used as solutions or dispersions in solvents or dispersion media, for example water, acetone, propan-2-ol, butanone, ethyl acetate, ethanol, and toluene. Mixtures of these solvents may be used to achieve acceptable evaporation rates of the solvent from the core. The amount of solvent used will vary widely depending upon a number of factors including the type of core material being used. In general, the solvents should be added in amounts to provide a resin solution which may be easily applied in accordance with known processes.

Thermoplastic resins can be used in the melt phase or can be applied as a film under the action of heat and pressure. A thermoplastic resin in the form of a fiber, fibrid, pulp, or powder can also be introduced as a component of an additional web followed by application of heat and pressure to provide for better resin penetration and formation of a continuous matrix. Some resins, such as benzoxazine resin, can be applied as a hot melt adhesive followed by curing at an appropriate temperature.

The amount of resin coating which is applied will vary depending upon a number of factors. For example, non-woven materials which are relatively porous and have high void content will require more resin in order to achieve adequate wetting and filling of the honeycomb walls. For relatively non-porous core materials or materials with low void content, the quanity of matrix resin can be relatively low.. The coating resin is applied to the core in accordance with known block dipping or web coating procedures. After coating, the resin coated web of the core structure of this invention has an in-plane Young's modulus of at least 14 GPa. In some embodiments, the Young's modulus is at least 20 GPa or even 30 GPa.

When the reinforcing web is fabricated into a honeycomb core structure there are two principal methods of manufacture, expansion or corrugation. Both methods are well known in the art and are further detailed on page 721 of the Engineered Materials Handbook, Volume 1-Composites, ASM International, 1988.

In some embodiments, prior to the expansion or corrugation processes, the web may be coated with a first amount of coating resin with the remainder being applied in a second amount after honeycomb formation.

When the reinforcing web is fabricated into a folded core structure, different production techniques are required. Processes for converting web substrates into folded core structures are described in United States patents 6,913,570 B2 and 7,115,089 B2 as well as United States patent application 2007/0141376. In some embodiments, all of the coating resin is applied after folded core formation while in other embodiments the web substrate is coated with a first amount of coating resin prior to forming of the core with the remainder being applied in a second amount after core formation.

Methods for coating the webs before and after core formation are well known in the art.

The thickness of the reinforcement web before application of the matrix resin is dependent upon the end use or desired properties of the honeycomb core and in some embodiments is typically from 25 to 100 micrometers (1 to 4 mils) thick. In some embodiments, the basis weight of the web is from 10 to 50 grams per square meter (0.3 to 1.5 ounces per square yard).

### Multi-Laver Web

This invention is further directed to a structural core comprising a nonwoven fibrous multi-layer reinforcement web coated with a thermoset or thermoplastic resin wherein
(i) the reinforcing web comprises at least one first layer of carbon nanotubes and at least one second layer comprising filaments having a diameter greater than 1 micrometer, a tenacity of from 10 to 65 grams per dtex and a modulus of from 100 to 3500 grams per dtex, and
(ii) the coating resin comprises from 15 to 75 weight percent of the weight of web plus resin.

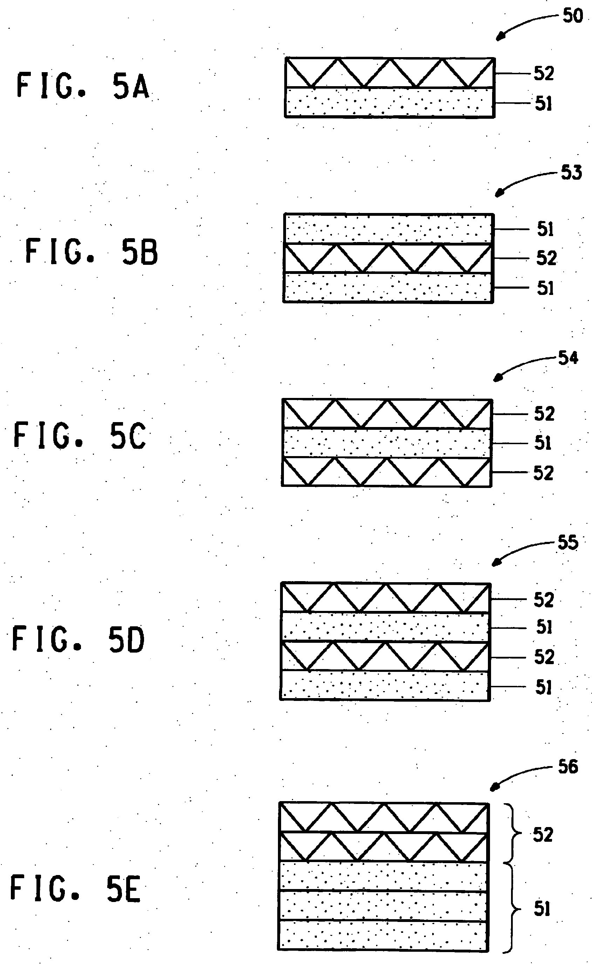

FIG 5A shows generally at 50 a multi-layer reinforcement web comprising a first layer 51 and a second layer 52. FIG 5B shows generally at 53 a multi-layer reinforcement web comprising two first layers 51 located on both sides of a second layer 52. FIG 5C shows generally at 54 a multi-layer reinforcement web comprising a first layer 51 having a second layer 52 located on both sides of a the first layer. FIG 5D shows generally at 55 a multi-layer reinforcement web comprising alternating first and second layers shown at 51 and 52 respectively. FIG 5E shows generally at 56 a multi-layer reinforcement web comprising a plurality of first layers 51 adjoining a plurality of second layers 52. Other combinations of layers both in number and positioning within the web may be envisaged for a multi-layer reinforcement web. Adjacent layers may be held together by mechanical or chemical means. Examples of mechanical means include stitching or needlepunching. An example of a chemical means is adhesive bonding.

### First Layer

The first layer of the multilayer reinforcement web comprising carbon nanotubes is as described above.

### Second Layer

In some enbondiments of this invention, at least one second layer of the multi-layer reinforcement web is a nonwoven sheet in the form of a paper. A preferred paper of the second layer contains both high strength fibers and binder. In one embodiment, the paper comprises from 10 to 100 weight percent fibers and correspondingly from 0 to 90 weight percent binder. In another embodiment the paper comprises from 10 to 85 weight percent fibers and from 15 to 90 weight percent binder. In yet another embodiment the paper comprises from 50 to 100 weight percent fibers and from 0 to 50 weight percent binder.

The high strength fibers have a tenacity of from 10 to 65 grams per dtex. In some embodiments the fiber tenacity is from 15 to 40 grams per dtex and in yet other embodiments the tenacity is from 20 to 35 grams per dtex. The fibers preferably have a modulus of from 100 to 3500 grams per dtex. In some embodiments the modulus is from 150 to 2700 grams per dtex. The fibers preferably have a linear density of from 50 to 4,500 dtex. In some embodiments the linear density is from 100 to 3500 dtex and in yet other embodiments the linear density is from 300 to 1800 dtex. The fibers preferably have an elongation to break of from 3.6 to 5.0 percent. In some other embodiments, the elongation to break is from 3.6 to 4.5.

In one embodiment, the length of the high strength fibers is from 0.5 to 26 mm. In another embodiment, the length of the fibers is from 1 to 8 mm and in yet another embodiment, the length of the fibers is from 1.5 to 6 mm. In one embodiment, the diameter of such fibers is from 5 to 14 microns.

The reinforcing web can also include fibers of lower strength and modulus blended with the higher strength fibers. The amount of lower strength fiber in the blend will vary on a case by case basis depending on the desired strength of the folded core structure. The higher the amount of low strength fiber, the lower will be the strength of the core structure. In a preferred embodiment, the amount of lower strength fiber should not exceed 30%. Examples of such lower strength fibers are meta-aramid fibers and poly (ethylene therephtalamide) fibers.

The reinforcing web can contain small amounts of inorganic particles and representative particles include mica, vermiculite, and the like; the addition of these performance enhancing additives being to impart properties such as improved fire resistance, thermal conductivity, dimensional stability, and the like to the nonwoven sheet and the final folded core structure.

In some embodiments, the web thickness is from 25 to 100 micrometers (1 to 4 mills) and the web basis weight is from 10 to 50 grams per square meter (0.3 to 1.5 ounces per square yard).

The high strength fibers of the web may be in the form of cut fiber (floc) or pulp either used alone or in combination.

Floc is generally made by cutting continuous spun filaments into specific-length pieces. If the floc length is less than 0.5 millimeters, it is generally too short to provide a paper with adequate strength; if the floc length is more than 26 millimeters, it is very difficult to form uniform wet-laid webs. Floc having a diameter of less than 5 micrometers, and especially less than 3 micrometers, is difficult to produce with adequate cross sectional uniformity and reproducibility. If the floc diameter is more than 20 micrometers, it is very difficult to form uniform papers of light to medium basis weights.

The term "pulp", as used herein, means particles of fibrous material having a stalk and fibrils extending generally therefrom, wherein the stalk is generally columnar and about 10 to 50 micrometers in diameter and the fibrils are fine, hair-like members generally attached to the stalk measuring only a fraction of a micrometer or a few micrometers in diameter and about 10 to 100 micrometers long. One possible illustrative process for making aramid pulp is generally disclosed in United States Patent No. 5,084,136.

A preferred binder in the paper is fibrids. The term "fibrids" as used herein, means a very finely-divided polymer product of small, filmy, essentially two-dimensional particles having a length and width on the order of 100 to 1000 micrometers and a thickness on the order of 0.1 to 1 micrometer. Fibrids are typically made by streaming a polymer solution into a coagulating bath of liquid that is immiscible with the solvent of the solution. The stream of polymer solution is subjected to strenuous shearing forces and turbulence as the polymer is coagulated. Preparation of fibrids is taught in U.S. Pat. No. 3,756,908 with a general discussion of processes to be found in U.S. Pat. No. 2,999,788. The fibrids should be refined in accordance with the teachings of U.S. Pat. No. 3,756,908 patent only to the extent useful to permit permanent densification and saturability of the final paper.

Preferable polymers for fibrids in this invention include aramids (poly (m-phenylene isophthalamide) and poly (p-phenylene terephthalamide)). Other binders include polysulfonamide (PSA), poly-phenylene sulfide (PPS), and polyimides. Other binder materials are in the general form of resins and can be epoxy resins, phenolic resins, polyureas, polyurethanes, melamine formaldehyde resins, polyesters, polyvinyl acetates, polyacrylonitriles, alkyd resins, and the like. Preferred resins are water dispersible and thermosetting. Most preferred resin binders comprise water-dispersible epoxy resins.

The composition of both high strength fibers and fibrids can vary. Preferable types of high strength fibers include aromatic polyamide, liquid crystal polyester, polybenzazole, polypyridazole , polysulfonamide, polyphenylene sulfide, polyolefins, carbon, glass and other inorganic fibers or mixture thereof.

Paper webs made using fibrids and short fibers have been described in US Patent No. 3,756,908, to Gross and US Patent No. 5,137,768 to Lin.

A suitable high strength fiber is para-aramid. A commercially available para-aramid high modulus high strength fiber reinforcing paper web for the production of core structures is KEVLAR® N636 paper sold by E. I. DuPont de Nemours and Company, Wilmington, DE. Core structures can also me made from m-aramid fiber nonwoven web also available from DuPont under the tradename NOMEX®.

A paper web may also comprise cellulose as exemplified by a Kraft paper. Cellulose may also be present in a paper comprising a blend of aramid and cellulosic fibers.

Suitable glass fibers include S-glass and E-glass. E-Glass is a commercially available low alkali glass. One typical composition consists of 54 weight % SiO₂, 14 weight % Al₂O₃, 22 weight % CaO/MgO, 10 weight % B₂O₃ and less then 2 weight % Na₂O/K₂O. Some other materials may also be present at impurity levels. S-Glass is a commercially available magnesia-alumina-silicate glass. This composition is stiffer, stronger, more expensive than E-glass and is commonly used in polymer matrix composites.

Carbon fibers based on polyacrylonitrile are commercially available in standard, intermediate or high modulus grades such as Torayca® from Toray Carbon fibers America, Decatur, AL or HexTow® from Hexcel Corporation, Stamford, CT. Carbon fibers may also be pitch based such as Thornel® from Cytec Carbon Fibers LLC, Piedmont, SC.

In some embodiments, the second layer may be a nonwoven sheet comprising carbon nanotubes.

The cell walls of the honeycomb or the outer surfaces of the folded core of this invention may comprise, in addition to a resin impregnated or coated nonwoven reinforcing web, one or more layers of a resin impregnated or coated woven or knitted fabric or a film. Examples of woven and knitted fabrics include those incorporating aramid, carbon or glass fibers.

Examples of suitable films include polyimide, polysulfonamide (PSA), poly-phenylene sulfide (PPS), liquid crystal polyester, PEEK, and PEKK films.

The multi-layer reinforcing web structure can be formed prior to the core formation or directly during the core formation. In the first case, the layers can be combined together in the coating/impregnation process. In the second case, the method described in United States Patent number 6,592,963 may be applied.

### Coating Resin

The multi-layer reinforcement is coated with a resin. The coating resin, the amount of resin coated onto or into the web and the coating methods are as previously described.

### Composite Panel

Core structures based on either a CNT web or a mulit-layer reinforcement web comprising at least one layer of CNT's may be used to make structural composite panels having facesheets bonded to at least one exterior surface of the core structure. The facesheet material can be a plastic sheet or plate, a fiber reinforced plastic (prepreg) or metal. The facesheets are attached to the core structure under pressure and usually with heat by an adhesive film or from the resin in the prepreg. The curing is carried out in a press, an oven or an autoclave. Such techniques are well understood by those skilled in the art.

### TEST METHODS

Thickness of of.the sheet structures before and after impregnation with the matrix resin was determined in accordance with ASTM D374-99 (Reapproved 2004).

Basis Weight and Density of the sheet structures before and after impregnation with the matrix resin was determined in accordance with ASTM D646-96 (Reapproved 2001).

Resin pickup was determined by comparing dry weight of the sample before and after resin application and calculating the resin weight percent in the total weight of the raw paper and the cured resin.

Tensile properties of the sheet structures before and after resin impregnation (Yound's Modulus, Tensile Stiffness, Tensile Strength, Tensile Index, and Elongation at Break) were determined in accordance with ASTM D828.

Specific stiffness was calculated as the arithmetic average tensile stiffness values between the first (machine) and the second (cross) direction of the coated or impregnated paper, divided by the basis weight of the coated paper.

Young's Modulus Ratio was obtained by dividing the Young's Modulus in the first (machine) direction by the Young's Modulus in the second (cross) direction.

### EXAMPLES

In the following examples, all parts and percentages are by weight and all degrees in centigrade unless otherwise indicated. Examples prepared according to the current invention are indicated by numerical values. Control or Comparative Examples are indicated by letters. Data and test results relating to the Comparative and Inventive Examples are shown in Table 1.

In the following examples, the phenolic resin used was a resole phenolic solvated resin type GP445D05 supplied by Geogia-Pacific Resins, Inc. The carbon nanotube sheet was supplied by Nanocomp Technologies Inc. The resin cure cycle, unless separately indicated, was a three stage cycle of 15 minutes at 85 degrees, 15 minutes at 121 degrees, and 120 minutes at 180 degrees.

### Comparative Example A

Two sheets of 1.4N636 Kevlar® paper were laminated together with simultaneuos impregnation with phenolic resin followed by curing of the resin. The mechanical properties of the cured laminate structure are as shown in Table 1.

### Example 1

A carbon nanotube sheet structure having a basis weight of 10.4 gsm, a thickness of 0.019 mm,a densityof 0.58 g/cu.cm, a tensile strength of 7.0 N/cm and 9.3 N/cm in the first and second directions respectively, and elongation at break of 16.0 and 14.1 % in the first and second directions respectively was impregnated with phenolic resin After the impregnation, the resin was cured. The mechanical properties of the cured sheet structure are as shown in Table 1.

### Example 2

A carbon nanotube sheet structure having a basis weight of 27.6 gs/m, a thickness of 0.047 mm, a density of 0.58 g/cm3, a tensile strength of 37 N/cm and 20 N/cm in the first and second directions respectively, and elongation at break of 15.7 and 14.1% in the first and second directions respectively, was calendered between metal rolls at ambient temperature and linear pressure 3000 N/cm. The calendered sheet had a basis weight of 27.6 g/m2, a thickness of 0.036 mm, a density of 0.78 g/cm3, a tensile strength of 33 N/cm and 24 N/cm in the first and second directions respectively, and an elongation at break of 7.4 and 9.7% in the first and second directions respectively. The sheet was impregnated with phenolic resin and then cured. The mechanical properties of the cured sheet structure are as shown in Table 1.

### Example 3

A calendered sheet of Example 2, was laminated between two sheets of 1.4N636 p-aramid Kevlar® paper with simultaneuos impregnation with phenolic resin. The aramid paper was obtained from E.I. duPont de Nemours and Company, Wilmington, DE. After the impregnation, the laminated structure was cured. The mechanical properties of the cured laminate structure is as shown in Table 1.

### Example 4

Two plies of a carbon nanotube sheet of Example 2 were calendered between metal rolls at ambient temperature and at a linear pressure 3000 N/cm. The calendered laminate sheet had basis weight of 55.9 gsm, athickness 0.064 mm, and density 0.88 g/ cm³. The two ply laminate was impregnated with phenolic resin and cured. The mechanical properties of the cured laminate structure are as shown in Table 1.

### Example 5

A honeycomb structure is formed from a calendered CNT sheet of Example 2. The sheet is impregnated with phenolic resin. The third step of the resin cure cycle is for three minutes at 180 degrees instead of 20 minutes at 180 degrees as in the previous examples.

Node lines of adhesive are applied to the sheet surface at a width of 2 mm and a pitch of 5 mm. The adhesive comprises a 50% solids solution comprising 70 parts by weight of an epoxy resin identified as Epon 826 and sold by Shell Chemical Co.; 30 parts by weight of an elastomer-modified epoxy resin identified as Heloxy WC 8006 and sold by Wilmington Chemical Corp, Wilmington, DE, USA; 54 parts by weight of a bisphenol A - formaldehyde resin curing agent identified as UCAR BRWE 5400 and sold by Union Carbide Corp.; 0.6 parts by weight of 2-methylimidazole in a glycol ether solvent identified as Dowanol PM and sold by The Dow Chemical Company and sold by Miller-Stephenson Chemical Co.; and 1.5 parts by weight of fumed silica identified as Cab-O-Sil and sold by Cabot Corp. The adhesive is partially cured on the sheet in an oven at 130° C for 6.5 minutes.

The sheet with the adhesive node lines is cut into 500 mm lengths. Forty sheets are stacked one on top of the other, such that node lines in each sheet is offset relative to those in an adjacent sheet by half a pitch, that is a half the interval between adjacent node lines. The offset occurs alternately to one side or the other, so that the final stack is uniformly vertical. The number of stacked sheets is then hot-pressed between plates at the softening point of the adhesive, causing the adhesive node lines to melt and cure and, on cooling, bond adajcent sheets in the region of the node lines. For the above node line adhesive, the press cycle is 140 degrees for 30 minutes and then 177 degrees for 40 minutes. The applied pressure is 3.5 kg per square cm.

The stack of bonded CNT sheets is then expanded in the direction counter to the stacking direction to form cells having an equilateral cross section. Each of the sheets are extended between each other such that the sheets are folded along the edges of the bonded node lines and the portions not bonded are extended in the direction of the tensile force to separate the sheets from each other. A frame is used to expand and hold the honeycomb in the expanded shape.

The expanded honeycomb is then placed in a bath containing the phenolic resin. After impregnating with resin, the honeycomb is taken out from the bath and is dried in a drying furnace by hot air first at 82 degrees for 15 minutes, then at 121 degrees for 15 minutes and finally at 182 degrees for 60 minutes. This drying cycle will remove the solvent and cure the resin. The frame holding the honeycomb is then removed.

### Example 6

A CNT sheet of in Example 2 was calendered between two plies of formed paper. The paper comprised 70 weight percent p-aramid floc and 30 weight percent meta-aramid fibrids. The para-aramid floc was Kevlar®49 having a nominal filament linear density of 1.5 denier per filament (1.7 dtex per filament), a 6.4 mm cut length, a tenacity of 24 grams per denier and a modulus of 960 grams per denier. Such floc is available from E.I. DuPont de Nemours and Company, Wilmington, DE The meta-aramid fibrids were prepared as described in US Patent 3,756,908 to Gross. Calendering was conducted at ambient temperature and linear pressure of 2000 N/cm.

A folded core is formed from the calendered 3-ply sheet. The sheet is impregnated with phenolic resin. The solvent is evaporated and the resin partially cured to a B-stage thus producing a resin impregnated nonwoven sheet (prepreg). A folded core is then formed from this preimpregnated B-staged material in accordance with United States Patent 6,913,570 to Kehrle. A zig-zag fold pattern as shown in Figure 4 is made. The geometrical parameters of the core were: V = 14.26 mm, T = 5.00 mm, S = 4.63 mm, L = 10.62 mm, H = 30.00 mm. The resin is completely cured by heat treatment of the final core at 180 C for 1.5 hours. The finished folded core structure has a density of 25.0 kg/m3 and a resin content of 41 % of the total core weight.

**Table 1**

| Example | Phenolic resin content, (wt.%) | Young's modulus, GPa | | Ratio for Young's modulus | Specific stiffness, kN*m/g | Tensile index, N*m/g |
|---|---|---|---|---|---|---|
| | | FD* | SD* | | | |
| 1 . | 66 | 17.6 | 18.2 | 1.03 | 11.6 | 174 |
| 2 | 41 | 41.7 | 30.7 | 1.36 | 24.0 | 170 |
| 3 | 37 | 14.3 | 14.8 | 1.03 | 12.1 | 183 |
| A | 37 | 11.0 | 12.0 | 1.09 | 9.7 | 121 |
| 4. | 38 | 32.0 | 26.5 | 1.21 | 20.5 | 177 |

| | | | | | | |
|---|---|---|---|---|---|---|
| *FD = First (Machine) Direction *SD = Second (Cross) Direction | | | | | | |

The results show that a reinforcing nonwoven web comprising carbon nanotubes, after being impregnated with the resin, provides for honeycomb or folded core walls having a high Young's modulus (14 GPa. or higher as per Example 11).

Additional densification of the CNT nonwoven sheet prior to convertion into a honeycomb or folded core provides an even higher Young's modulus and specific stiffness to the walls of the core structure as shown by Examples 2 and 4 while still maintaining an acceptable level of tensile performance.

The reinforcing web comprising a nonwoven layer of carbon nanotubes and a layer of p-aramid paper (Example 3), after impregnation with the matrix resin, has significantly higher Young's modulus, specific stiffness, and tensile index in comparison with a similar structure made from two layers of p-aramid paper (Comparative Example A).

All examples show that it is possible to keep a ratio of Young's modulus in the first direction to Young's modulus in the second direction below 2. This feature is important as it permits the honeycomb and folded core structures to keep an optimum balance between compression and shear properties of the final structure.

The data from Example 2 also shows that the nonwoven sheet of carbon nanotubes does not lose tensile strength after calendering. The decrease in elongation at break after calendering does not significantly impact performance and is deemed to be acceptable. Thus the density of the sheet structure is increased for better properties in the final composite. Despite the density increase, the sheet still has good processability characteristics that are required by the different methods of core manufacturing.

## Claims

1. A structural core comprising a nonwoven fibrous reinforcement web of carbon nanotubes, the web being coated with a thermoset or thermoplastic resin wherein:
(i) the carbon nanotubes are oriented within the reinforcement web such that, after resin coating, the ratio of modulus in the plane of the web in a first direction to the modulus in a second direction orthogonal to the first direction is no greater than 2.0,
(ii) the in-plane Young's modulus of the resin coated web is at least 14 GPa, and
(iii) the coating resin comprises from 15 to 75 weight percent of the weight of web plus resin.

2. The core of claim 1 wherein in-plane Young's modulus of the resin coated web is at least 20 GPa .

3. The core of claim 1 wherein in-plane Young's modulus of the resin coated web is at least 30 GPa.

4. The core of claim 1 wherein the ratio of modulus in a first direction to the modulus in a second direction orthogonal to the first direction is no greater than 1.5.

5. The core of claim 1 wherein the density of the reinforcement web before coating with resin is at least 0.7 g/cm³.

6. The core of claim 1 wherein the core is in the form of a honeycomb structure.

7. The core of claim 6 wherein the cell shape of the honeycomb structure is hexagon.

8. The core of claim 1 wherein the core is in the form of a folded

9. A structural core comprising a nonwoven fibrous multi-layer reinforcement web coated with a thermoset or thermoplastic resin wherein:
(i) the reinforcing web comprises at least one first layer of carbon nanotubes and at least one second layer comprising fibers having a diameter greater than 1 micrometer, a tenacity of from 10 to 65 grams per dtex and a modulus of from 100 to 3500 grams per dtex, and
(ii) the coating resin comprises from 15 to 75 weight percent of the weight of web plus resin.

10. The core of claim 9 wherein:
(i) the ratio of the modulus in the plane of the web in a first direction to the modulus in a second direction orthogonal to the first direction is no greater than 2.0, and
(ii) the in-plane Young's modulus of the resin coated multi-layer web is at least 14 GPa.

11. The core of claim 9 wherein the core is in the form of a honeycomb or folded core structure.

12. The core of claim 9 wherein the ratio of modulus in a first direction to the modulus in a second direction orthogonal to the first direction is no greater than 1.5.

13. The core of claim 8 wherein the fibers of the at least one second layer are para-aramid, glass, carbon or blends thereof.

14. A composite panel comprising a core structure according to any one of the preceeding claims and at least one facesheet attached to at least one exterior surface of the core structure.

15. The composite panel according to claim 14, wherein the facesheet is made from resin impregnated fiber, plastic or metal.

## Patentansprüche

1. Struktureller Kern umfassend eine faserige Vliesstoffverstärkungsbahn aus Kohlenstoff-Nanoröhren, wobei die Bahn mit einem Duroplast- oder Thermoplastharz beschichtet ist, wobei:
(i) die Kohlenstoffnanoröhren innerhalb der Verstärkungsbahn derart orientiert sind, dass nach dem Harzbeschichten das Verhältnis des Moduls in der Ebene der Bahn in einer ersten Richtung zum Modul in einer zweiten Richtung orthogonal zu der ersten Richtung nicht höher als 2,0 ist,
(ii) der Youngsche Modul in der Ebene der harzbeschichteten Bahn mindestens 14 GPa beträgt und
(iii) das Beschichtungsharz 15 bis 75 Gewichtsprozent des Gewichts der Bahn plus Harz umfasst.

2. Kern nach Anspruch 1, wobei der Youngsche Modul in der Ebene der harzbeschichteten Bahn mindestens 20 GPa beträgt.

3. Kern nach Anspruch 1, wobei der Youngsche Modul in der Ebene der harzbeschichteten Bahn mindestens 30 GPa beträgt.

4. Kern nach Anspruch 1, wobei das Verhältnis des Moduls in einer ersten Richtung zum Modul in einer zweiten Richtung orthogonal zu der ersten Richtung nicht höher als 1,5 ist.

5. Kern nach Anspruch 1, wobei die Dichte der Verstärkungsbahn vor dem Beschichteten mit Harz mindestens 0,7 g/cm³ beträgt.

6. Kern nach Anspruch 1, wobei der Kern in Form einer Wabenstruktur vorliegt.

7. Kern nach Anspruch 6, wobei die Zellgestalt der Wabenstruktur hexagonal ist.

8. Kern nach Anspruch 1, wobei der Kern in Form einer gefalteten Struktur vorliegt.

9. Struktureller Kern umfassend eine faserige, mehrschichtige VliesstoffVerstärkungsbahn, die mit einem Duroplast- oder Thermoplastharz beschichtet ist, wobei:
(i) die Verstärkungsbahn mindestens eine erste Lage von Kohlenstoff-Nanoröhren und mindestens eine zweite Lage umfasst, die Fasern umfasst, die einen Durchmesser von mehr als 1 Mikrometer, eine Reißfestigkeit von 10 bis 65 g Gramm pro dtex und einen Modul von 100 bis 3500 Gramm pro dtex aufweist und
(ii) das Beschichtungsharz 15 bis zu 75 Gewichtsprozent des Gewichts der Bahn plus Harz umfasst.

10. Kern nach Anspruch 9, wobei:
(i) das Verhältnis des Moduls in der Ebene der Bahn in einer ersten Richtung zum Modul in einer zweiten Richtung orthogonal zu der ersten Richtung nicht höher als 2,0 ist und
(ii) der Youngsche Modul in der Ebene der harzbeschichteten mehrschichtigen Bahn mindestens 14 GPa beträgt.

11. Kern nach Anspruch 9, wobei der Kern in Form einer Waben- oder gefalteten Kernstruktur vorliegt.

12. Kern nach Anspruch 9, wobei das Verhältnis des Moduls in einer ersten Richtung zum Modul in einer zweiten Richtung orthogonal zu der ersten Richtung nicht höher als 1,5 ist.

13. Kern nach Anspruch 8, wobei die Fasern der mindestens einen zweiten Lage Para-Aramid, Glas, Kohlenstoff oder Mischungen davon sind.

14. Verbundstoffplatte umfassend eine Kernstruktur nach einem der vorhergehenden Ansprüche und mindestens eine Sichtplatte, die an mindestens eine Außenfläche der Kernstruktur befestigt ist.

15. Verbundstoffplatte nach Anspruch 14, wobei die Sichtplatte aus mit Harz imprägniert Faser, Kunststoff oder Metall hergestellt ist.

## Revendications

1. Noyau structurel comprenant un voile de renfort fibreux non-tissé de nanotubes de carbone, le voile étant enduit d'une résine thermodurcie ou thermoplastique où:
(i) les nanotubes de carbone sont orientés à l'intérieur du voile de renfort de sorte que, après l'enduction de résine, le rapport du module dans le plan du voile dans un premier sens au module dans un second sens orthogonal au premier sens n'est pas supérieur à 2,0,
(ii) le module de Young dans le plan du voile enduit de résine est d'au moins 14 GPa, et
(iii) la résine d'enduction comprend de 15 à 75 pour cent en poids du poids du voile plus de la résine.

2. Noyau selon la revendication 1 où le module de Young dans le plan du voile enduit de résine est d'au moins 20 GPa.

3. Noyau selon la revendication 1 où le module de Young dans le plan du voile enduit de résine est d'au moins 30 GPa.

4. Noyau selon la revendication 1 où le rapport du module dans un premier sens au module dans un second sens orthogonal au premier sens n'est pas supérieur à 1,5.

5. Noyau selon la revendication 1 où la densité du voile de renfort avant l'enduction avec la résine est d'au moins 0,7 g/cm³.

6. Noyau selon la revendication 1 où le noyau se présente sous la forme d'une structure en nids d'abeille.

7. Noyau selon la revendication 6 où la forme des alvéoles de la structure en nids d'abeille est hexagonale.

8. Noyau selon la revendication 1 où le noyau se présente sous la forme d'une structure plissée.

9. Noyau structurel comprenant un voile de renfort multicouche fibreux non-tissé enduit d'une résine thermodurcie ou thermoplastique où:
(i) le voile de renfort comprend au moins une première couche de nanotubes de carbone et au moins une seconde couche comprenant des fibres ayant un diamètre supérieur à 1 micromètre, une ténacité de 10 à 65 grammes par dtex et un module de 100 à 3 500 grammes par dtex, et
(ii) la résine d'enduction comprend de 15 à 75 pour cent en poids du poids du voile plus de la résine.

10. Noyau selon la revendication 9 où:
(i) le rapport du module dans le plan du voile dans un premier sens au module dans un second sens orthogonal au premier sens n'est pas supérieur à 2,0, et
(ii) le module de Young dans le plan du voile multicouche enduit de résine est d'au moins 14 GPa.

11. Noyau selon la revendication 9 où le noyau se présente sous la forme d'une structure en nids d'abeille ou d'une structure plissée à âme.

12. Noyau selon la revendication 9 où le rapport du module dans un premier sens au module dans un second sens orthogonal au premier sens n'est pas supérieur à 1,5.

13. Noyau selon la revendication 8 où les fibres de la au moins une seconde couche sont du para-aramide, du verre, du carbone ou leurs mélanges.

14. Panneau composite comprenant une structure à âme selon l'une quelconque des revendications précédentes et au moins une feuille protectrice fixée à au moins une surface externe de la structure à âme.

15. Panneau composite selon la revendication 14, où la feuille protectrice est constituée de fibres imprégnées de résine, de matière plastique ou de métal.
